# EUROPÄISCHE PATENTSCHRIFT

(11) **EP 1 183 619 B1**
(45) Veröffentlichungstag und Bekanntmachung des Hinweises auf die Patenterteilung: **24.07.2002**
(21) Anmeldenummer: 00922649.9
(22) Anmeldetag: 18.04.2000
(51) Int. Cl.: G06F 15/18, G06N 5/02

(54) **SITUATIONSABHÄNGIG OPERIERENDES SEMANTISCHES NETZ N-TER ORDNUNG**
SITUATION-DEPENDENT OPERATING SEMANTIC N-ORDER NETWORK
RESEAU SEMANTIQUE D'ORDRE N, OPERANT EN FONCTION D'UNE SITUATION

(30) Priorität: 19.04.1999 DE 19917592
(43) Veröffentlichungstag der Anmeldung: 06.03.2002
(73) Patentinhaber: Definiens AG, 80339 München (DE)
(72) Erfinder: ATHELOGOU, Maria, D-80469 München (DE); BOBOLAS, Konstantinos, D-81677 München (DE); ESCHENBACHER, Peter, D-91077 Neunkirchen a. Br. (DE); ENTLEITNER, Renate, D-80637 München (DE); SCHMIDT, Günter, D-82008 Unterhaching (DE)
(74) Vertreter: Winter, Brandl, Fürniss, Hübner, Röss, Kaiser, Polte Partnerschaft
(86) Internationale Anmeldenummer: EP0003540
(87) Internationale Veröffentlichungsnummer: WO0063788

(56) Entgegenhaltungen:
- PAUL R. COHEN, PHILIP M. STANHOPE, RICK KJELDSEN: "Classification by semantic Matching" PROCEEDINGS OF THE SIXTH ANNUAL PHOENIX CONFERENCE ON COMPUTERS AND COMMUNICATIONS, 25. - 27. Februar 1987, Seiten 566-570, XP002152703 Scottsdale, Arizona, USA.
- LEE A. BECKER, JING PENG: "Network Processing of Hierarchical Knowledge for Classification and Diagnosis" PROCEEDINGS OF THE INTERNATIONAL CONFERENCE ON NEURAL NETWORKS,US,NEW YORK, IEEE, Bd. CONF. 1, 21. Juni 1987 (1987-06-21), Seiten II-309-317, XP000042313
- YING-KUEI YANG: "Behind The Inheritance Relations In a Semantic Network" PROCEEDINGS OF THE SOUTHEAST CONFERENCE (SOUTHEASTCON),US,NEW YORK, IEEE, Bd. -, 1. April 1990 (1990-04-01), Seiten 289-295, XP000203113 New Orlean, Louisiana, USA.
- EO-PONG LIM, VLADIMIR CHERKASSKY: "Semantic networks and associative databases: two approaches to knowledge representation and reasoning" IEEE EXPERT,US,IEEE INC. NEW YORK, Bd. 7, Nr. 4, August 1992 (1992-08), Seiten 31-40, XP002129793 ISSN: 0885-9000

## Beschreibung

Die vorliegende Erfindung betrifft ein semantisches Netz n-ter Ordnung gemäß dem Oberbegriff des Anspruchs 1 und insbesondere ein derartiges semantisches Netz, in welchem ein Operieren innerhalb des semantischen Netzes abhängig von einer jeweiligen in dem semantischen Netz vorliegenden Situation durchgeführt wird.

Im Stand der Technik auf dem Gebiet der "Künstlichen Intelligenz" und des "Künstlichen Lebens" ist der Begriff eines "emotionalen Agenten" bekannt.

Gemäß dem Fachbuch "Künstliches Leben, Anspruch und Wirklichkeit" von Werner Kinnebrock, 1996, Oldenbourg, ISBN 3486234854, weist ein derartiger emotionaler Agent die folgenden Eigenschaften auf:
a) der Agent agiert in Umwelten,
b) der Agent besitzt einen Handlungsplan,
c) der Agent ist autonom,
d) der Agent besitzt einen eigenen Speicherbereich oder kann auf Speicherbereiche zugreifen, die für alle Agenten bestimmt sind,
e) der Agent kann eine definierte spezielle Aufgabe innerhalb eines Agentensystems übernehmen,
f) der Agent besitzt die Fähigkeit zu lernen, was durch neuronale Netze unterstützt oder ermöglicht werden kann,
g) der Agent besitzt Beurteilungsmechanismen,
h) der Agent kann ein dynamisches adaptives Verhalten zeigen, und
i) der Agent kann Emotionen besitzen und zeigen, welche das Verhalten des Agenten beeinflussen und von diesem Verhalten beeinflußt werden.

Derartige Agenten aufweisende Agentensysteme können hierarchisch aufgebaut sein oder mit verteilter Kontrolle arbeiten. Die Emotionen stellen hierbei lediglich Stimmungen dar, die bei einem Operieren in dem Agentensystem "mitgenommen" werden, also das Operieren innerhalb des Agentensystems beeinflussen.

Kurz gesagt werden in dem zuvor erwähnten Fachbuch verhaltensbasierte Systeme beschrieben, die Informationen intelligent verarbeiten und zusätzlich derart in einer künstlichen oder realen Umwelt agieren, daß sie definierte Aufgaben möglichst erfolgreich lösen. Evolutionäre Entwicklung und individuelles Lernen sind zwei Wege, auf denen diese Systeme ihre Fähigkeiten erwerben.

Ferner ist es bisher im Stand der Technik bekannt, Emotionen von Menschen oder Tieren zu simulieren und zu beschreiben. Hierbei wird zum Beispiel von den Akteuren oder von den Computern gesprochen, die Gefühle zeigen können. Der dabei verfolgte Zweck ist es also lediglich, den Menschen oder die Tiere zu simulieren, zu beschreiben und/oder zu erklären.

Bei derzeitigen Netzstrukturen besteht, je höher die Komplexität der Netzstruktur ist, desto mehr darin ein Problem, daß beim Operieren an einer Netzstruktur zum Beispiel die Leistungsgrenze auch moderner Computer oder Computernetze erreicht oder gar überschritten wird, da auf alle Informationen innerhalb der Netzstruktur zugegriffen werden muß. Daher ist es in weitestgehend allen materiellen und immateriellen Netzstrukturen im Stand der Technik ein wesentliches Ziel, eine Art eines Managements zu verwenden, mittels welchem zur Verfügung stehende Ressourcen, wie zum Beispiel die Zeit, optimal genutzt werden können. Bisher verwendete Ansätze zum Durchführen eines Managements sind jedoch starr oder nur wenig flexibel hinsichtlich der verwendeten Strategie und sind demgemäß mit zunehmender Komplexität einer Netzstruktur nur bedingt oder gar nicht anwendbar.

Insbesondere eignen sich die bisherigen Ansätze zum Durchführen eines Managements nicht oder nur bedingt zum bedarfsorientierten Operieren an Netzstrukturen, wie zum Beispiel semantischen Netzen, unter Berücksichtigung von jeweiligen zu bestimmten Zeitpunkten vorliegenden Zuständen innerhalb der Netzstruktur.

Ein semantisches Netz gemäß dem Oberbegriff des Anspruchs 1 ist aus LIM E-P et al.: "SEMANTIC NETWORKS AND ASSOCIATIVE DATABASES: TWO APPROACHES TO KNOWLEGDE REPRESENTATION AND REASONING", IEEE Expert, US, NY, Bd. 7, Nr. 4, August 1992, Seiten 31 bis 40 bekannt

Die Aufgabe der vorliegenden Erfindung besteht demgemäß darin, ein semantisches Netz n-ter Ordnung zu schaffen, mittels welchem ein bedarfsorientiertes Operieren innerhalb des semantischen Netzes situationsabhängig auf flexible Weise möglich ist.

Diese Aufgabe wird erfindungsgemäß mit den in Anspruch 1 angegebenen Maßnahmen gelöst.

Bei dem semantischen Netz gemäß Anspruch 1 ist es möglich, abhängig von einer jeweiligen im semantischen Netz vorhandenen Situation, die sich durch die zeitlich veränderlichen Zustände der semantischen Janus-Einheiten ausdrückt, ein Operieren innerhalb des semantischen Netzes auszuführen, bei welchem ein Fokussieren bzw. Konzentrieren auf ausgewählte Teile des semantischen Netzes stattfindet. Dadurch müssen sich diese semantischen Janus-Einheiten nicht zu jedem Zeitpunkt mit allen möglichen Informationsinhalten und/oder Beziehungsinhalten von semantischen Einheiten und/oder Verknüpfungseinheiten innerhalb des semantischen Netzes im Detail befassen. Folglich können Ressourcen, wie zum Beispiel Zeit, in dem semantischen Netz eingespart werden, die ansonsten zur Verarbeitung innerhalb des semantischen Netzes erforderlich wären.

Durch das Fokussieren auf ausgewählte Teile des semantischen Netzes ist demgemäß eine wesentliche Verringerung von zu verarbeitendem Wissen bzw. von zu verarbeitenden Daten sichergestellt, wodurch zum Beispiel eine Verarbeitungsgeschwindigkeit aufgrund der erzielten zeitlichen Ressourcenaufteilung drastisch erhöht werden kann.

Weitere vorteilhafte Ausgestaltungen der vorliegenden Erfindung sind Gegenstand der Unteransprüche.

Die vorliegende Erfindung wird nachstehend anhand eines Ausführungsbeispiels unter Bezugnahme auf die beiliegende Zeichnung näher erläutert.

Es zeigen:
- **Fig. 1a bis 1e**: Darstellungen von in einem semantischen Netz verwendbaren Verknüpfungseinheiten.
- **Fig. 2**: eine Darstellung eines beispielhaften semantischen Netzes;
- **Fig. 3**: einen Verfahrensablauf zur Verdeutlichung eines Operierens in einem semantischen Netz gemäß einem Ausführungsbeispiel der vorliegenden Erfindung; und
- **Fig. 4**: ein in dem Ausführungsbeispiel der vorliegenden Erfindung verwendbares Koordinatensystem von Affekten.

Bezüglich der in dieser Anmeldung verwendeten Begriffe "semantisches Netz", "semantische Einheit" und "Verknüpfungseinheit" wird auf die DE-A-199 08 204 mit dem Titel "Fraktales Netz n-ter Ordnung zum Behandeln komplexer Strukturen" verwiesen, wobei die Begriffe "semantisches Netz" und "fraktales Netz" als gleichbedeutend anzusehen sind.

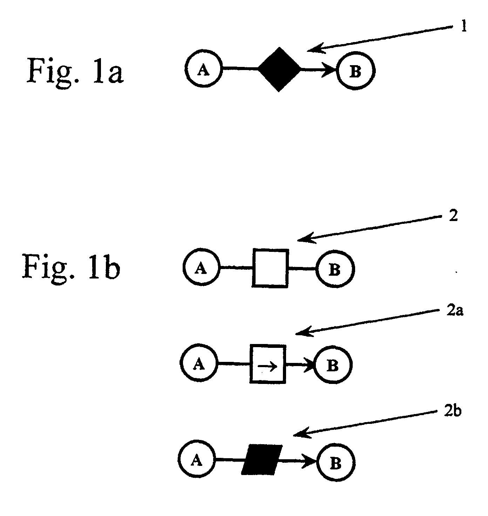

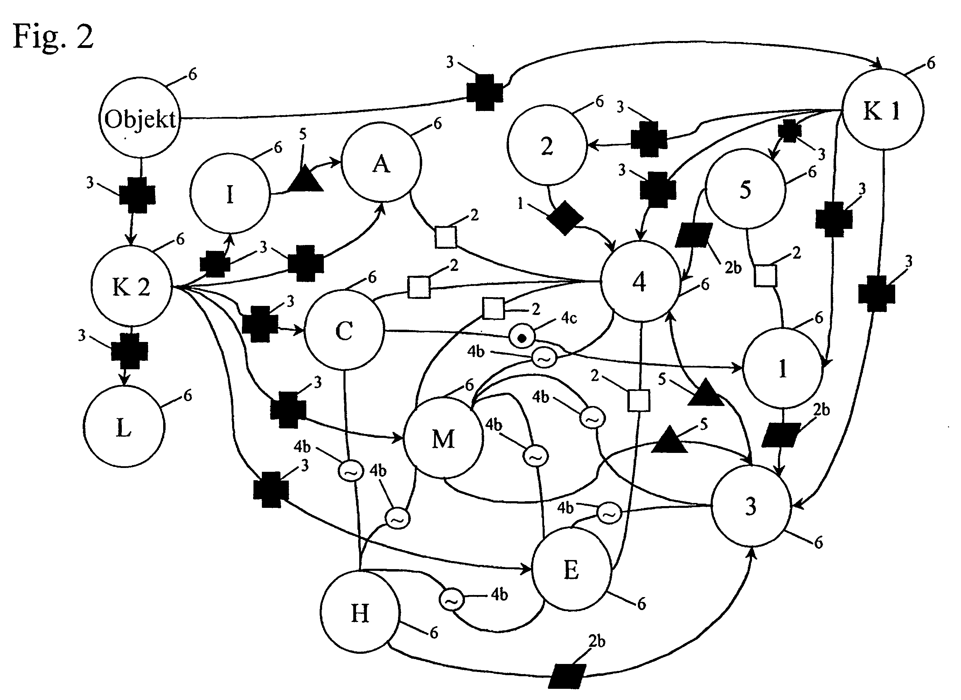

Bevor im weiteren Verlauf ein Ausführungsbeispiel der vorliegenden Erfindung detailliert beschrieben wird, wird der Aufbau eines beispielhaften semantischen Netzes unter Bezugnahme auf die Figuren 1a bis 1e und 2 zur Verdeutlichung beschrieben.

Die Figuren 1a bis 1e zeigen Darstellungen von in einem semantischen Netz verwendbaren Verknüpfungseinheiten.

Als elementare Typen von Verknüpfungseinheiten können Austauschbeziehungen und Relationen angesehen werden. Austauschbeziehungen sind als derartige Beziehungen definiert, die einen abstrakten, stofflichen und/oder kommunikativen Austausch zwischen semantischen Einheiten beschreiben. Relationen sind hingegen jene Beziehungsinhalte von Verknüpfungseinheiten, die irgendwelche Beziehungen zwischen semantischen Einheiten beschreiben. Die Figuren 1a bis 1e zeigen einige derartige elementare Verknüpfungseinheiten, die einen Beziehungsinhalt beschreiben.

Im Fall von hierarchisch strukturiertem Wissen, wie im semantischen Netz, können Verknüpfungseinheiten vom Typ Austauschbeziehung weiter in zwei Gruppen unterteilt werden.

In Fig. 1a ist eine Verknüpfungseinheit 1 vom Typ Austauschbeziehung gezeigt, die semantische Einheiten in zueinander unterschiedlichen Hierarchieebenen des semantischen Netzes n-ter Ordnung miteinander verbindet. Es wird also die Art der Beziehung von einer größeren, d.h., übergeordneten, semantischen Einheit zu einer kleineren, d.h., untergeordneten, semantischen Einheit und umgekehrt beschrieben. Das heißt mit anderen Worten, daß ein Skalenwechsel durchgeführt wird. Verknüpfungseinheiten mit Beziehungen, welche die beiden genannten Merkmale, also einen Austausch und einen Skalenwechsel aufweisen, werden nachstehend als Verknüpfungseinheiten vom Typ VA/VS bezeichnet. Beim Ausdruck "VA/VS" steht demgemäß der Ausdruck "VA" für "Austausch" und der Ausdruck "VS" für "Skalenwechsel". Einfach ausgedrückt kann eine derartige Verknüpfungseinheit 1 vom Typ VA/VS in Richtung des in Fig. 1a gezeigten Pfeils von A nach B als "A enthält B" und in umgekehrter Richtung als "B ist Teil von A" angesehen werden. Dies entspricht der Definition einer Einbettungshierarchie.

In Fig. 1b sind Verknüpfungseinheiten 2, 2a und 2b vom Typ Austauschbeziehung gezeigt, die semantische Einheiten in gleichen Hierarchieebenen des semantischen Netzes n-ter Ordnung miteinander verbinden. Das heißt mit anderen Worten, daß kein Skalenwechsel durchgeführt wird. Verknüpfungseinheiten mit Beziehungen, welche die beiden genannten Merkmale, also einen Austausch und keinen Skalenwechsel aufweisen, werden nachstehend als Verknüpfungseinheiten vom Typ VA/VH bezeichnet. Beim Ausdruck "VA/VH" steht demgemäß der Ausdruck "VA" für "Austausch" und der Ausdruck "VH" für "kein Skalenwechsel". Einfach ausgedrückt kann eine derartige Verknüpfungseinheit 2a vom Typ VA/VH in Richtung von A nach B als "A ist Eingangsgröße von B" und in umgekehrter Richtung als "B ist Ausgangsgröße von A" und kann eine derartige Verknüpfungseinheit 2b vom Typ VA/VH in Richtung von A nach B als "A wird beschrieben durch B" und in umgekehrter Richtung als "B ist Attribut von A" angesehen werden.

Ebenso können im Fall von hierarchisch strukturiertem Wissen, wie im semantischen Netz, Verknüpfungseinheiten vom Typ Relation weiter in zwei Gruppen unterteilt werden.

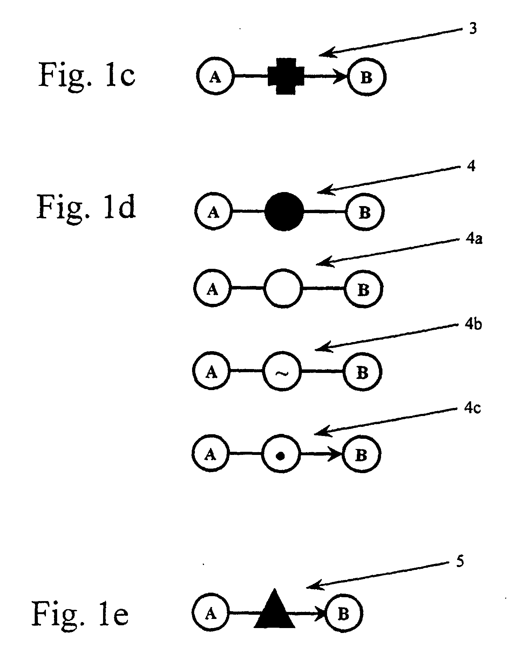

In Fig. 1c ist eine Verknüpfungseinheit 3 vom Typ Relation gezeigt, die semantische Einheiten in zueinander unterschiedlichen Hierarchieebenen des semantischen Netzes n-ter Ordnung miteinander verbindet. Es wird also die Art der Beziehung von einer allgemeineren semantischen Einheit zu einer spezielleren semantischen Einheit und umgekehrt beschrieben. Das heißt mit anderen Worten, daß ein Skalenwechsel durchgeführt wird. Verknüpfungseinheiten mit Beziehungen, welche die beiden genannten Merkmale, also eine Relation und einen Skalenwechsel aufweisen, werden nachstehend als Verknüpfungseinheiten vom Typ VR/VS bezeichnet. Beim Ausdruck "VR/VS" steht demgemäß der Ausdruck "VR" für "Relation" und der Ausdruck "VS" für "Skalenwechsel". Einfach ausgedrückt kann eine derartige Verknüpfungseinheit 3 vom Typ VR/VS in Richtung des in Fig. 1c gezeigten Pfeils von A nach B als "A ist im speziellen B" und in umgekehrter Richtung als "B ist im allgemeinen A" angesehen werden. Dies entspricht der Definition einer Ähnlichkeitshierarchie.

In Fig. 1d sind Verknüpfungseinheiten 4, 4a, 4b und 4c vom Typ Relation gezeigt, die semantische Einheiten in gleichen Hierarchieebenen des semantischen Netzes n-ter Ordnung miteinander verbinden. Das heißt mit anderen Worten, daß kein Skalenwechsel durchgeführt wird. Verknüpfungseinheiten mit Beziehungen, welche die beiden genannten Merkmale, also eine Relation und keinen Skalenwechsel aufweisen, werden nachstehend als Verknüpfungseinheiten vom Typ VR/VH bezeichnet. Beim Ausdruck "VR/VH" steht demgemäß der Ausdruck "VR" für "Relation" und der Ausdruck "VH" für "kein Skalenwechsel". Einfach ausgedrückt kann eine derartige Verknüpfungseinheit 4a vom Typ VR/VH als "A ist (ortsbezogen) benachbart zu B", kann eine derartige Verknüpfungseinheit 4b vom Typ VR/VH als "A ist ähnlich zu B" und kann eine derartige Verknüpfungseinheit 4c vom Typ VR/VH in Richtung von A nach B als "B folgt auf A" und in umgekehrter Richtung als "A wird gefolgt von B" angesehen werden.

Ferner zeigt Fig. 1e eine weitere Verknüpfungseinheit 5, die in Richtung von A nach B als "A hat Janus/Funktion B" und in umgekehrter Richtung als "B ist Janus/Funktion von A" angesehen werden kann. Bezüglich einer detaillierteren Beschreibung dieser Verknüpfungseinheit 5 wird auf die folgende detaillierte Beschreibung des Ausführungsbeispiels verwiesen.

Es ist hierbei anzumerken, daß neben den zuvor genannten Typen von Verknüpfungseinheiten beliebige Typen von Verknüpfungseinheiten im allgemeinen von einem Anwender frei gewählt werden können. Jedoch ist es sinnvoll, einige elementare Typen von Verknüpfungseinheiten in einer Basisbibliothek vorab zu definieren.

Schließlich ist anzumerken, daß, wie es ersichtlich ist, Verknüpfungseinheiten sowohl direktional, das heißt, gerichtet, als auch bidirektional, das heißt, ungerichtet, sein können.

Unter Bezugnahme auf Fig. 2 wird nun ein beispielhaftes semantisches Netz beschrieben.

In Fig. 2 bezeichnet das Bezugszeichen 6 jeweilige semantische Einheiten. Ferner bezeichnet das Bezugszeichen 3 jeweilige Verknüpfungseinheiten vom Typ "ist im speziellen/ist im allgemeinen", bezeichnet das Bezugszeichen 4b jeweilige Verknüpfungseinheiten vom Typ "ist ähnlich zu", bezeichnet das Bezugszeichen 1 jeweilige Verknüpfungseinheiten vom Typ "enthält/ist Teil von", bezeichnet das Bezugszeichen 5 jeweilige Verknüpfungseinheiten vom Typ "hat Janus/Funktion/ist Janus/Funktion von", bezeichnet das Bezugszeichen 2 jeweilige Verknüpfungseinheiten vom Typ "wechselwirkt mit", bezeichnet das Bezugszeichen 2b jeweilige Verknüpfungseinheiten vom Typ "wird beschrieben durch/ist Attribut von" und bezeichnet das Bezugszeichen 4c jeweilige Verknüpfungseinheiten vom Typ "folgt auf/wird gefolgt von".

Hierbei ist festzuhalten, daß die semantischen Einheiten mindestens Informationsinhalte besitzen und daß die Verknüpfungseinheiten mindestens Beziehungsinhalte besitzen, wobei die jeweiligen Beziehungsinhalte die Art der gegenseitigen Beziehung zwischen den semantischen Einheiten angeben, die mittels einer jeweiligen Verknüpfungseinheit verknüpft sind.

Gemäß der beispielhaften Darstellung in Fig. 2 wird zum Beispiel eine Verknüpfung zwischen der mit "Objekt" bezeichneten semantischen Einheit 6 und der mit "K1" bezeichneten semantischen Einheit 6 durch die Verknüpfungseinheit 3 vom Typ "ist im speziellen/ist im allgemeinen" beschrieben durch "Objekt ist im speziellen K1/K1 ist im allgemeinen Objekt". Ferner wird zum Beispiel eine Verknüpfung zwischen der mit "A" bezeichneten semantischen Einheit 6 und der mit "4" bezeichneten semantischen Einheit 6 durch die Verknüpfungseinheit 4b vom Typ "ist ähnlich zu" beschrieben durch "A ist ähnlich zu 4/4 ist ähnlich zu A". Das gleiche gilt unter Berücksichtigung der jeweils verwendeten der zuvor unter Bezugnahme auf die Figuren 1a bis 1e erläuterten Verknüpfungseinheiten analog für alle in Fig. 2 gezeigten semantischen Einheiten.

Deshalb ist es ersichtlich, daß die in Fig. 2 mit einem Pfeil gezeichneten Verknüpfungseinheiten 1, 2b, 3, 4c und 5 direktionale Verknüpfungseinheiten sind, das heißt, Verknüpfungseinheiten, deren jeweiliger Verknüpfungstyp in einer Richtung eine Bedeutung und in einer dazu entgegengesetzten Richtung eine andere (entgegengesetzte) Bedeutung aufweist. Im Gegensatz dazu sind die in Fig. 2 ohne Pfeil gezeichneten Verknüpfungseinheiten 2 und 4b bidirektionale Verknüpfungseinheiten, deren Verknüpfungstyp in beiden Richtungen die gleiche Bedeutung aufweist.

Hinsichtlich der Verknüpfungseinheiten 5 vom Typ "hat Janus/Funktion/ist Janus/Funktion von" ist folgendes anzumerken. Diese Verknüpfungseinheiten 5 vom Typ "hat Janus/Funktion/ist Janus/Funktion von" dienen dazu, die Möglichkeit zu schaffen, besondere semantische Einheiten in das semantische Netz aufzunehmen, die in der Lage sind, an anderen semantischen Einheiten und/oder Verknüpfungseinheiten bestimmte Operationen auszuführen. Derartige semantische Einheiten werden im weiteren Verlauf als semantische Janus-Einheiten bezeichnet.

In diesem Zusammenhang stellt eine semantische Janus-Einheit eine besondere semantische Einheit dar, die einen Algorithmus oder eine Sammlung von Algorithmen aufweist, die den Informationsinhalt von semantischen Einheiten und/oder Verknüpfungseinheiten verändern und/oder neue semantische Einheiten und/oder Verknüpfungseinheiten erzeugen bzw. bestehende semantische Einheiten und/oder Verknüpfungseinheiten vernichten können. Eine semantische Janus-Einheit ist über jeweils eine besondere Verknüpfungseinheit 5 vom Typ "hat Janus/Funktion/ist Janus/Funktion von" mit einer oder mehreren semantischen Einheiten und/oder Verknüpfungseinheiten verbunden, in deren Nachbarschaft die semantische Janus-Einheit operieren soll.

Dies bedeutet, daß die Funktionalität der semantischen Janus-Einheit derart eingeschränkt ist, daß sie lediglich in der Lage ist, an denjenigen semantischen Einheiten und/oder Verknüpfungseinheiten die bestimmten Operationen durchzuführen, die sich in einem vorgegebenen Nachbarschaftsbereich einer mit ihr verknüpften semantischen Einheit und/oder Verknüpfungseinheit befinden. Ferner kann eine semantische Janus-Einheit über eine oder mehrere Verknüpfungseinheiten mit anderen semantischen Janus-Einheiten und/oder mit Attributen verknüpft sein.

Im Detail kann eine semantische Janus-Einheit eine oder mehrere der folgenden Operationen durchführen: das Erzeugen neuer semantischer Einheiten und/oder Verknüpfungseinheiten; das Bündeln bereits vorhandener semantischer Einheiten zu einer einzigen semantischen Einheit, die gegebenenfalls neu zu erzeugen ist; das Verändern und/oder Löschen bereits vorhandener semantischer Einheiten und/oder Verknüpfungseinheiten; das Vergleichen vorhandener semantischer Einheiten und/oder Verknüpfungseinheiten; das Erfassen und Ändern von Werten von Attributen von semantischen Einheiten und/oder Verknüpfungseinheiten; das Ausführen eines Algorithmus und/oder das Berechnen einer Funktion; das Erfassen eines Janus oder eines Teils eines Janus, das heißt, das Klassifizieren eines Algorithmus oder eines Teils eines Algorithmus.

Die wesentliche Aufgabe einer semantischen Janus-Einheit ist das Bündeln und Kontexten von Informationsinhalten. Hierbei ist unter Bündeln das Berechnen von Informationsinhalten einer als Zentrum dienenden semantischen Einheit aus den Informationsinhalten von benachbarten semantischen Einheiten und/oder Verknüpfungseinheiten zu verstehen. Unter Kontexten ist der zum Bündeln analog inverse Vorgang zu verstehen, das heißt, Informationsinhalte der benachbarten semantischen Einheiten und/oder Verknüpfungseinheiten werden in Abhängigkeit der Informationsinhalte der als Zentrum dienenden semantischen Einheit geändert, wobei diese die Nachbarschaft definiert. Auf diese Weise ist es zum Beispiel auf einfache Weise möglich, ständig aktuelle Statistiken einer Menge von semantischen Einheiten zu erhalten (Bündeln) bzw. Änderungen von Rahmenbedingungen aktuell an eine Menge von semantischen Einheiten weiterzuleiten (Kontexten).

In Fig. 2 sind demgemäß zum Beispiel die folgenden semantischen Janus-Einheiten vorhanden: die mit "I" bezeichnete semantische Einheit 6, da diese über die Verknüpfungseinheit 5 vom Typ "hat Janus/Funktion/ist Janus/Funktion von" mit der mit "A" bezeichneten semantischen Einheit 6 verknüpft ist, also die Beziehung "I hat Janus/Funktion A/A ist Janus/Funktion von I" erfüllt, die mit "4" bezeichnete semantische Einheit 6, da diese über die Verknüpfungseinheit 5 vom Typ "hat Janus/Funktion/ist Janus/Funktion von" mit der mit "3" bezeichneten semantischen Einheit 6 verknüpft ist, also die Beziehung "3 hat Janus/Funktion 4/4 ist Janus/Funktion von 3" erfüllt, und die mit "3" bezeichnete semantische Einheit 6, da diese über die Verknüpfungseinheit 5 vom Typ "hat Janus/Funktion/ist Janus/Funktion von" mit der mit "M" bezeichneten semantischen Einheit 6 verknüpft ist, also die Beziehung "M hat Janus/Funktion 3/3 ist Janus/Funktion von M" erfüllt.

Hinsichtlich weiterer Merkmale der semantischen Janus-Einheit, der Verknüpfungseinheit 5 vom Typ "hat Janus/Funktion/ist Janus/Funktion von" sowie des Begriffs "Nachbarschaft" wird wiederum auf die zuvor erwähnte Anmeldung des Anmelders der vorliegenden Erfindung verwiesen, wobei insbesondere die semantische Janus-Einheit einen wesentlichen Aspekt der vorliegenden Erfindung darstellt, der zum Management in einem semantischen Netz verwendet wird, wie es nachstehend detailliert beschrieben wird.

Der zuvor erwähnte Begriff der Nachbarschaft ist eng mit dem Begriff Distanz verbunden. Eine erste semantische Einheit wird dann als zu einer zweiten semantischen Einheit benachbart definiert, wenn eine Distanz zwischen diesen kleiner als ein vorgegebener oder berechneter Wert, das heißt, ein Grenzwert, ist. Dabei hängt ein Maß der Distanz von Informations- und/oder Bedeutungsinhalten der semantischen Einheiten ab, über die die zweite semantische Einheit von der ersten semantischen Einheit aus erreichbar ist.

Zum Beispiel ist es möglich, das Maß der Distanz mit Gewichtungen in Verknüpfungseinheiten zu berechnen, wobei in diese Berechnung ebenso der Typ der Verknüpfungseinheit eingeht.

Es wird also eine Distanzfunktion dazu verwendet, um den Abstand zwischen jeweils zwei semantischen Einheiten anzugeben. Um die Distanz aus dem Gewicht der Verknüpfungseinheiten zu bestimmen, können geeignete mathematische Funktionen eines veränderbaren Parameters G als die Distanzfunktion festgelegt werden, wobei dieser Parameter G in jeder Verknüpfungseinheit vorhanden ist und die Stärke der Verknüpfung jeweiliger semantischer Einheiten ausdrückt. Anstelle des Parameters G besteht ebenso die Möglichkeit, eine Klassifikation zur Definition der Nachbarschaft zu verwenden. Ferner wird hierbei eine unmittelbare Nachbarschaft als eine derartige definiert, bei der eine semantische Einheit über eine Verknüpfungseinheit direkt mit einer anderen semantischen Einheit verbunden ist und wird eine mittelbare Nachbarschaft als eine derartige definiert, bei der eine semantische Einheit indirekt über mehrere semantische Einheiten und/oder Verknüpfungseinheiten verbunden ist.

Gemäß dem Ausführungsbeispiel der vorliegenden Erfindung weisen die in einem semantischen Netz vorhandenen semantischen Janus-Einheiten neben den zuvor erwähnten Merkmalen und Eigenschaften ferner einen zeitlich veränderlichen Zustand auf, der es ermöglicht, abhängig von einer im semantischen Netz vorhandenen Situation Operationen in diesem semantischen Netz durchzuführen.

Es wird also aufgrund des zeitlich veränderlichen Zustands ein zeitlich dynamisches Verhalten in das semantische Netz eingebracht, was zu einem sehr flexiblen Management innerhalb des semantischen Netzes führt.

Da sich eine "Sichtweise" einer semantischen Janus-Einheit in das semantische Netz auf der Grundlage dieses zeitlich veränderlichen Zustands ändert, drückt dieser zeitlich veränderliche Zustand einer semantischen Janus-Einheit einen Erregungszustand bzw. einen Affekt aus, in der sich eine semantische Janus-Einheit befindet.

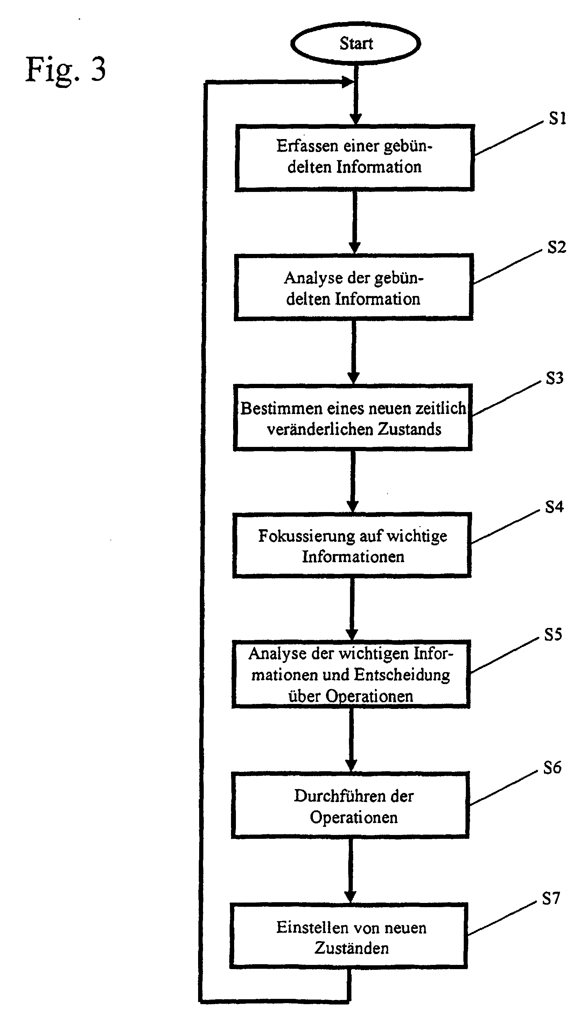

Das Operieren innerhalb des semantischen Netzes wird nun unter Bezugnahme auf das einfache Flußdiagramm in Fig. 3 näher erläutert.

Eine semantische Janus-Einheit erfaßt anhand einer groben Mustererkennung (Schritte S1 und S2), wie zum Beispiel einer statistischen Erfassung, eine gebündelte Information über Informationsinhalte, Attribute, Funktionen und eine Nachbarschaft einer semantischen Einheit oder eines Teilnetzes des semantischen Netzes, mit denen die semantische Janus-Einheit verknüpft ist (Schritt S1).

Im Anschluß daran führt die semantische Janus-Einheit eine Analyse der gebündelten Information durch, um zu bestimmen, was wesentlich ist (Schritt S2). Das heißt, die semantische Janus-Einheit führt dahingehend eine Analyse durch, welche Informationsinhalte, Attribute, Funktionen und/oder Verknüpfungseinheiten "wichtig" sind. Es wird also ermittelt, auf was sich die semantische Janus-Einheit konzentrieren soll, wobei hierbei der zeitlich veränderliche Zustand der semantischen Janus-Einheit diese Entscheidung mitbestimmt. Genauer gesagt wird aus der Nachbarschaft der semantischen Einheit eine zu beobachtende Nachbarschaft ermittelt, die eine Untermenge der Nachbarschaft darstellt. Da sich nunmehr die semantische Janus-Einheit auf die zu beobachtende Nachbarschaft konzentriert, erfolgt also eine wesentliche Verringerung von zu verarbeitenden Informationen und somit ein erhebliches Einsparen von Ressourcen.

Anhand eines Ergebnisses der vorhergehenden Analyse wird nunmehr ein neuer zeitlich veränderlicher Zustand der semantischen Janus-Einheit bestimmt (Schritt S3). Es ist anzumerken, daß hierbei sowohl der vorliegende zeitlich veränderliche Zustand als auch weitere Beurteilugskriterien in die Bestimmung des neuen zeitlich veränderlichen Zustands mit einbezogen werden.

Diese weiteren Beurteilungskriterien bestimmen allgemein ausgedrückt, was, wann, wo und wie durchzuführen ist. Genauer gesagt legen diese Beurteilungskriterien das folgende fest:
a) welche Informationsinhalte von semantischen Einheiten, welche semantischen Einheiten oder welche Teilnetze als nächstes zu behandeln sind;
b) welche Prioritäten in einer semantischen Einheit, einem Teilnetz oder dem gesamten semantischen Netz gesetzt werden;
c) wie aus den Zuständen von semantischen Einheiten, von Teilnetzen des semantischen Netzes oder von dem gesamten semantischen Netz zeitlich veränderliche Zustände von semantischen Janus-Einheiten abzuleiten sind;
d) wie schnell sich zeitlich veränderliche Zustände von semantischen Janus-Einheiten ändern; und/oder
e) wie semantische Einheiten und/oder Verknüpfungseinheiten behandelt werden.

Diese Beurteilungskriterien können für jede semantische Janus-Einheit individuell festgelegt werden und demgemäß weist jede semantische Janus-Einheit aufgrund dieser Beurteilungskriterien ein eigenes subjektives Verhalten auf. Die Beurteilungskriterien drücken also einen Charakter der semantischen Janus-Einheiten aus.

Der Charakter und der Affekt einer semantischen Janus-Einheit sind sich dahingehend ähnlich, daß der Charakter Grundeigenschaften aufweist, die dem Affekt entsprechen, wobei diese Grundeigenschaften die Weise mitbestimmen, auf welche eine Verarbeitung innerhalb des semantischen Netzes durchzuführen ist. Der grundlegende Unterschied zwischen Charakter und Affekt einer semantischen Janus-Einheit besteht darin, daß der Affekt im Gegensatz zum Charakter eine sehr hohe Dynamik aufweist, das heißt, der Affekt kann sich nach Erfassen einer neuen im semantischen Netz vorhandenen Situation bei der groben Mustererkennung abhängig von dieser schnell ändern. Der Charakter weist hingegen über eine gesamte Lebensdauer einer semantischen Einheit nur extrem minimale Veränderungen auf, wobei als Lebensdauer der semantischen Einheit ein Zeitsegment vom Erzeugen bis zum Vernichten der semantischen Einheit zu verstehen ist. Es ist hier noch anzumerken, daß der Affekt im allgemeinen eine unmittelbar wirkende Eigenschaft ist, die keiner Zeitverzögerung unterliegt.

Nach dem zuvor genannten Bestimmen eines neuen zeitlich veränderlichen Zustands fokussiert bzw. konzentriert sich die semantische Janus-Einheit auf diejenigen Informationsinhalte, Attribute, Funktionen und/oder Verknüpfungseinheiten, welche als "wichtig" analysiert worden sind (Schritt S4). Dies entspricht einer fokussierten Mustererkennung. Ein Beispiel hierfür ist, daß sich eine semantische Janus-Einheit lediglich auf Verknüpfungseinheiten vom Typ "VA/VH", also vom Typ "Austausch ohne Skalenwechsel" fokussiert.

Nach diesem Fokussieren analysiert die semantische Janus-Einheit die sich "im Fokus befindenden" Informationsinhalte, Attribute, Funktionen und/oder Verknüpfungseinheiten und entscheidet, welche Operationen bzw. Aktionen durchzuführen sind (Schritt S5). In dem zuvor erwähnten Beispiel der sich "im Fokus befindenden" Verknüpfungseinheiten vom Typ "VA/VH" kann zum Beispiel dahingehend eine Entscheidung erfolgen, welche Verknüpfungseinheit bzw. welche Verknüpfungseinheiten dieses Typs zu löschen sind oder welche Informationsinhalte von über diese Verknüpfungseinheiten verknüpften semantischen Einheiten zu ändern sind usw.

Danach werden die entschiedenen Operationen durchgeführt (Schritt S6). Eine derartige Operation kann zum Beispiel der Aufbau einer oder mehrerer neuer Nachbarschäftsverknüpfungseinheiten und/oder der Aufbau einer neuen Art von Nachbarschaftsverknüpfungseinheit sein, was einer Strukturbildung entspricht.

Es ist also ersichtlich, daß die zu gestaltende Nachbarschaft, an der die Operationen durchgeführt werden, nicht identisch zu der zu beobachtenden Nachbarschaft sein muß. Vielmehr können die zu gestaltende Nachbarschaft und die zu beobachtende Nachbarschaft abhängig von der jeweils vorhandenen Situation im semantischen Netz, von dem zeitlich veränderlichen Zustand der semantischen Janus-Einheit und/oder den Beurteilungskriterien der semantischen Janus-Einheit voneinander verschieden sein, zueinander gleich sein oder einander überlappen. Die zu gestaltende Nachbarschaft kann dabei zum Beispiel auf eine Weise, wie sie bereits zuvor erläutert worden ist, als eine unmittelbare oder mittelbare Nachbarschaft ermittelt werden, wobei bei dieser Ermittlung der zeitlich veränderliche Zustand der semantischen Janus-Einheit eingeht.

Im Anschluß daran werden in Übereinstimmung mit den Operationen veränderte Werte von Informationsinhalten der semantischen Einheiten und/oder Verknüpfungseinheiten eingestellt, neue oder neue Arten von Informationsinhalten oder neue semantische Einheiten und/oder Verknüpfungseinheiten und/oder Teilnetze eingeführt (entspricht einer Emergenz) oder semantische Einheiten und/oder Verknüpfungseinheiten und/oder Teilnetze innerhalb des semantischen Netzes verändert, gelöscht usw. (Schritt S7).

Im Anschluß daran wird erneut der Schritt der groben Mustererkennung ausgeführt und der Verfahrensfluß beginnt von neuem.

Wie es aus den vorhergehenden Ausführungen ersichtlich ist, weist eine semantische Janus-Einheit sowohl eine zu beobachtende als auch eine zu gestaltende Nachbarschaft auf. Die semantische Janus-Einheit beobachtet die zu beobachtende Nachbarschaft und führt an der zu gestaltenden Nachbarschaft die Operationen aus. Ein jeweils neuer Zustand einer semantischen Janus-Einheit kann aus dem vorliegenden Zustand der semantischen Janus-Einheit und/oder aus einer Analyse einer gegebenenfalls veränderlichen zu beobachtenden Nachbarschaft ermittelt werden. Außerdem kann der jeweils neue Zustand der semantischen Janus-Einheit sowohl auf die zu beobachtende als auch auf die zu gestaltende Nachbarschaft wirken.

Ein wesentlicher Aspekt der semantischen Janus-Einheit besteht darin, daß sie sich situationsabhängig auf Oberobjekte, Unterobjekte oder Nachbarobjekte der semantischen Einheit fokussieren kann, mit denen sie verknüpft ist. Oberobjekte stellen dabei semantische Einheiten dar, die sich auf einer höheren Skala wie die semantische Einheit befinden, mit der die semantische Janus-Einheit verknüpft ist. Unterobjekte sind hingegen semantische Einheiten, die sich auf einer niedrigeren Skala wie die semantische Einheit befinden, mit der die semantische Janus-Einheit verknüpft ist. Schließlich sind Nachbarobjekte semantische Einheiten, die sich auf der gleichen Skala wie die semantische Einheit befinden, mit der die semantische Janus-Einheit verknüpft ist. Dabei können ebenso die jeweiligen Verknüpfungseinheiten der Oberobjekte, Unterobjekte und Nachbarobjekte einbezogen werden.

Im vorhergehenden Verlauf ist beschrieben worden, wie die zu beobachtende und die zu gestaltende Nachbarschaft aus der Nachbarschaft von semantischen Einheiten abgeleitet werden, mit denen die semantische Janus-Einheit über die Verknüpfungseinheit vom Typ "hat Janus/Funktion/ist Janus/Funktion von" verknüpft ist. Neben den Verknüpfungseinheiten dieses Typs kann die semantische Janus-Einheit mit weiteren semantischen Einheiten und/oder Verknüpfungseinheiten über Verknüpfungseinheiten anderer Typen verknüpft sein. Diese weiteren mit der semantischen Janus-Einheit verknüpften semantischen Einheiten und/oder Verknüpfungseinheiten bilden demgemäß abhängig vom jeweiligen Typ der Verknüpfungseinheit Oberobjekte, Unterobjekte oder Nachbarobjekte der semantischen Janus-Einheit.

Daraus ergibt sich, daß die zu beobachtende und die zu gestaltende Nachbarschaft auch Nachbarschaftsbereiche aufweisen können, die sich aus einer Nachbarschaftsbeziehung der semantischen Janus-Einheit selbst zu ihren Oberobjekten, Unterobjekten und/oder Nachbarobjekten ergeben. Die hierbei berücksichtigten Nachbarschaftsbereiche können wiederum vom vorliegenden zeitlich veränderlichen Zustand der semantischen Janus-Einheit abhängig sein und sich auf ein Ändern dieses zeitlich veränderlichen Zustands hin ändern, wie es bereits zuvor erläutert worden ist.

Dadurch besteht die Möglichkeit, daß sich eine semantische Janus-Einheit ebenso lediglich auf sich selbst fokussieren kann. Dies bedeutet, daß die semantische Janus-Einheit ihre eigenen Informationsinhalte oder Verknüpfungen ändern oder löschen kann oder neue Informationsinhalte oder Verknüpfungen erzeugen oder auch sich selbst löschen kann. Ein Beispiel hierfür ist, daß sich eine semantische Janus-Einheit einen neuen Platz im semantischen Netz sucht.

Allgemein ausgedrückt bedeutet dies, daß semantische Janus-Einheiten mit anderen semantischen Einheiten über Verknüpfungseinheiten verknüpft sind und diese semantischen Janus-Einheiten Operationen ausführen können an sich selbst, an den semantischen Einheiten, mit denen diese verknüpft sind und/oder an denen, mit denen wiederum diese direkt oder indirekt verknüpft sind und/oder an den Verknüpfungseinheiten dieser genannten semantischen Einheiten. Wesentlich ist, daß diese semantischen Janus-Einheiten zeitlich veränderliche Zustände besitzen, die bestimmen, an welchen semantischen Einheiten und/oder Verknüpfungseinheiten welche Operationen auszuführen sind.

Durch die zuvor beschriebenen Maßnahmen kann neben einer situationsunabhängig veränderten Vorher/Nachherbeziehung eines semantischen Netzes eine Dynamik in das semantische Netz eingebracht werden, die eben genau eine im semantischen Netz vorliegende Situation erfaßt und abhängig von dieser über weitere durchzuführende Schritte entscheidet und diese durchführt. Es besteht also die Möglichkeit eines bedarfsorientierten Operierens innerhalb des semantischen Netzes.

Wie es zuvor erläutert worden ist, stellt der zeitlich veränderliche Zustand der semantischen Janus-Einheiten einen Affekt dar.

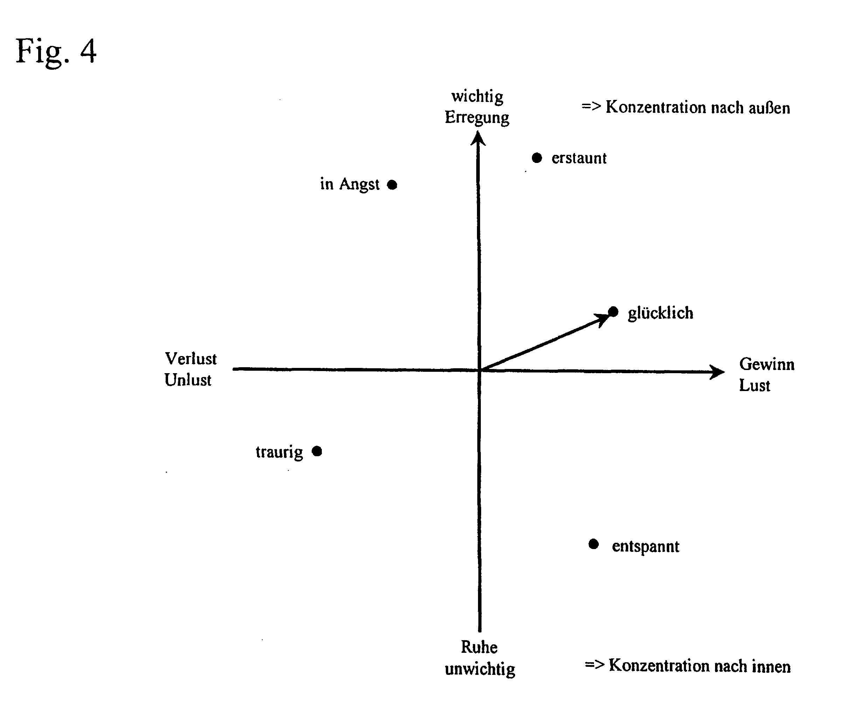

Zur Verdeutlichung der vorliegenden Erfindung wird nun unter Bezugnahme auf Fig. 4 erläutert, wie ein derartiger Affekt und seine Änderung realisierbar ist.

Fig. 4 zeigt ein Koordinatensystem, in welches unterschiedliche Affektzustände eingetragen sind.

Im allgemeinen werden Affekte als Zustände betrachtet, in denen sich ein Individuum befinden kann. Aus der Literatur sind fünf Grundzustände bekannt: Trauer, Angst, Entspannung, Erstaunen und Freude. Diese Grundzustände stehen repräsentativ für eine Ansammlung von ähnlichen Zuständen, wie zum Beispiel Angst und Frustration.

Aus einer derartigen Betrachtungsweise leitet sich das in Fig. 4 dargestellte Koordinatensystem ab. Dieses Koordinatensystem kann als semantische Einheit innerhalb des semantischen Netzes beschrieben werden. Die Koordinaten des Systems sind in zwei Dimensionen beschrieben. Die positive x-Achse ist mit "Gewinn" bezeichnet, die negative x-Achse ist mit "Verlust" bezeichnet, die positive y-Achse ist mit "wichtig" bezeichnet und die negative y-Achse ist mit "unwichtig" bezeichnet.

Es besteht die Möglichkeit aus jeder Achse des Koordinatensystems durch weitere Attribute, wie zum Beispiel Objekt-, Zeit- oder Raumbezüge, weitere Koordinaten, das heißt, Unterkoordinaten, abzuleiten.

In das Koordinatensystem der Affekte können die semantischen Einheiten "Affekte" eingebettet werden. Dies bedeutet, daß die semantischen Einheiten "Affekte" und die semantische Einheit "Koordinatensystem der Affekte" über Verknüpfungseinheiten vom Typ mit Skalenwechsel miteinander verknüpft sind. Ebenso können die semantischen Einheiten "Affekte" über Verküpfungseinheiten vom Typ ohne Skalenwechsel mit anderen semantischen Einheiten "Affekte" verknüpft sein. Zum Beispiel kann eine semantische Einheit "Affekte" mit Namen "in Angst" über Verknüpfungseinheiten mit den semantischen Einheiten "Affekte" mit Namen "Frust" oder "Panik" (beide in Fig. 4 nicht dargestellt) verknüpft sein. Ferner kann zum Beispiel eine semantische Einheit "Affekte" mit Namen "akute Existenzangst" (in Fig. 4 nicht gezeigt) ein Unterobjekt der semantischen Einheit "in Angst" sein, also eine Spezialisierung von dieser darstellen, usw. Diese Art der Beschreibung von Affekten ermöglicht je nach Situation eine grobe oder detaillierte Beschreibung von Affekten. Durch eine derartige Beschreibung von Affekten fokussiert sich eine semantische Janus-Einheit lediglich auf gebündelte, daß heißt, grobe Information. Es wird also eine gebündelte Information sowohl in den Prozessen der Mustereerkennung, der Entscheidungsfindung als auch der Durchführung von Aktionen verwendet, wie es bereits zuvor beschrieben worden ist.

Bei Verwendung des in Fig. 4 dargestellten Koordinatensystems wird also die zuvor beschriebene grobe Mustererkennung wie folgt durchgeführt.

Zuerst erfolgt eine Suche nach ungewöhnlichen Veränderungen in den Informationsinhalten, Attributen und/oder Funktionen einer semantischen Einheit. Danach erfolgt eine Suche nach konkreten Veränderungen, wie zum Beispiel nach Veränderungen in den Informationsinhalten einer bestimmten Art von Verknüpfungseinheiten. Danach wird der gesamte Zustand der semantischen Einheit grob als zum Beispiel "gut" oder "schlecht" klassifiziert. Im Anschluß erfolgt die Klassifikation des gesamten Zustands der semantischen Einheit in Verbindung mit dem Ergebnis der zuvor genannten Suche nach Veränderungen als "wichtig", "unwichtig", "Gewinn" und "Verlust".

"Gewinn", "Verlust", "wichtig" und "unwichtig" sind die Bezeichnungen der Achsen des in Fig. 4 dargestellten Koordinatensystems der Affekte. Die Bewegung innerhalb des Koordinatensystems bei einer Änderung des Affekts, das heißt, bei einer Änderung des zeitlich veränderlichen Zustands einer semantischen Janus-Einheit, auf der Grundlage einer in dem semantischen Netz erfaßten Situation kann durch einen Regelsatz oder ein Modell beschrieben werden. Der Entwurf eines derartigen Regelsatzes oder von Bewegungsgleichungen eines Modells kann dabei der Anwender je nach Anwendungszweck frei wählen. Zum Beispiel ist es vorstellbar, daß eine Verbesserung einer Situation einer semantischen Einheit dahingehend ausgelegt werden kann, daß sich die Anzahl von Nachbarschaftsobjekten erhöht hat. Dies kann zum Beispiel abhängig von einem Regelsatz oder einem Modell bedeuten, daß sich ein Gewinn für die gesamte Situation der semantischen Einheit ergibt und sich somit eine Veränderung des Affekts einer semantischen Janus-Einheit in Richtung der positiven x-Achse ergibt, also ein Lustgewinn erfolgt.

Die Affekte stellen also evolutionäre Strategien dar, deren Zweck eine kontextabhängige Fokussierung auf das wesentliche ist. Die Affekte können zum Beispiel als semantische Einheiten beschrieben werden, die in dem Koordinatensystem der Affekte eingebettet sind, das in Fig. 4 dargestellt ist. Durch den Affekt wird die Information über das Wissen über die Situation, in der sich eine semantische Einheit oder ein Teilnetz befindet, nur auf einen Punkt innerhalb des Koordinatensystems der Affekte, das heißt, auf den derzeit vorliegenden Affekt, gebündelt. Der aktuelle Affekt, das heißt der vorliegende zeitlich veränderliche Zustand, einer semantischen Janus-Einheit, stellt also die Bündelung über die Informationsinhalte und über die Nachbarschaft einer semantischen Einheit oder eines Teilnetzes dar.

Die zuvor beschriebene Weise, den Affekt als Strategie für das Ressourcenmamangement innerhalb von semantischen Netzen zu verwenden, stellt dabei ein vollkommen neuartiges Konzept dar. Dabei kann der Affekt und gegebenenfalls der Charakter einer semantischen Janus-Einheit zur Mustererkennung, Entscheidungsfindung und zur Durchführung von Handlungen sowie zur Wahrnehmung von deren Folgen sowohl in materiellen als auch immateriellen Netzen verwendet werden. Ein materielles Netz kann zum Beispiel ein Computernetz, ein Stromnetz, ein Verkehrsnetz, ein Versorgungsnetz usw. sein. Ein immaterielles Netz kann zum Beispiel ein semantisches Netz innerhalb einer Datenbank, das INTERNET usw. sein. Alle diese Netze können als semantische Netze n-ter Ordnung beschrieben werden.

Der wesentliche Vorteil einer Anwendung eines derartigen Ressourcenmanangements wie es zuvor beschrieben worden ist, ist die optimale Nutzung der zur Verfügung stehenden Ressourcen, wie zum Beispiel der Zeit, durch Fokussieren von semantischen Janus-Einheiten von semantischen Einheiten oder eines Teilnetzes auf das wesentliche. Ferner können die Ressourcen neben der Zeit Umweltressourcen, Informationen, Wissen und Raum beinhalten.

Nachstehend erfolgt eine Beschreibung einer Weiterbildung des Ausführungsbeispiels der vorliegenden Erfindung.

Ein Zeitmanagement eines semantischen Netzes kann als die Wahrnehmung, Erzeugung, Verwaltung und Gestaltung von semantischen Einheiten mittels semantischer Janus-Einheiten innerhalb des semantischen Netzes über die Dauer von einem oder mehreren Zeitsegmenten definiert werden. Ferner kann ein Zeitsegment je nach Bedarf zum Beispiel als eine semantische Einheit oder als einer der Informationsinhalte einer semantischen Einheit definiert werden. Ein Zeitsegment kann eine oder mehrere Zeiteinheiten als Informationsinhalte aufweisen. Zum Beispiel kann ein Zeitsegment eine Stunde Rechenzeit dauern.

Demgemäß wird die zeit als semantische Einheit erfaßt. In diesem Sinne können die semantischen Janus-Einheiten durch selektive Zeitsegmentierung semantische Zeiteinheiten bilden, ausselektieren, einordnen, neu plazieren, löschen, neu aus einer Kombination oder einem Zusammenwirken von anderen erzeugen (Emergenz), Verbindungen zwischen diesen schaffen (Assoziation, Gedächtinfunktionen, Lernen) oder diese derart in ihre Algorithmen einbeziehen, daß diese neue durch Simulation und Erwartung bilden können (Vorhersagen).

Jedes Zeitsegment ist innerhalb eines semantischen Netzes als eine semantische Einheit gebildet. Die unterschiedliche Dauer der Zeitsegmente in der Nachbarschaft der semantischen Zeit-Einheit unterliegt evolutionären Selektionsprinzipien, das heißt, Gedächtnisfunktionen.

Semantische Einheiten innerhalb des semantischen Netzes können sich auf Vergangenheit und/oder Gegenwart und/oder Zukunft beziehen.

Semantische Janus-Einheiten können innerhalb eines virtuellen von ihnen wahrgenommenen semantischen Netzes semantische Einheiten virtuell neu plazieren, neu kombinieren, neu erzeugen, verändern, löschen, ersetzen und damit Erwartungen ausrechnen, Vorhersagen machen, eine neue Identität finden usw. Dadurch wird eine sogenannte "Simulation-in-der-Simulation" möglich. Das bedeutet, daß die semantischen Janus-Einheiten Algorithmen und/oder Verfahren besitzen oder neu erzeugen können, diese weiterentwickeln und mit ihnen in einer Welt der Gedanken, das heißt, einem semantischen Gedanken- bzw. Ideen-Netz genauso wie in realen Netzen operieren können. Jede semantische Janus-Einheit kann in sich, daß heißt, innerhalb der semantischen Janus-Einheit, je nach Bedarf ein Abbild eines Teilnetzes schaffen und an diesem arbeiten, als ob das Abbild tatsächlich im Netz vorhanden wäre (Denkprozesse).

Um langfristige und kurzfristige Veränderungen von Informationsinhalten von semantischen Einheiten oder von Teilnetzen, wie zum Beispiel von Attributen, Funktionen, Algorithmen, zu erfassen, diese im semantischen Netz zu speichern, zueinander in Beziehung zu setzen, sich an diese zu erinnern (Gedächtnisfunktion), zeitliche Muster aus ihnen zu bilden oder zu erkennen, kann eine semantische Einheit "Zeitobjekt" definiert werden, die als Informationsinhalt den Zustand einer semantischen Einheit, eines Teilnetzes oder des gesamten Netzes zu einem Zeitsegment enthält. Durch entsprechende Gedächtnisfunktionen kann die semantische Janus-Einheit Zeitobjekte erzeugen (Zeitsegmentierung), ersetzen, vernichten oder im Netz anordnen, suchen oder wiedererkennen.

Eine mögliche Anwendung der vorliegenden Erfindung besteht zum Beispiel bei geometrischen Strukturen, wie zum Beispiel graphischen Objekten, die Verknüpfungen untereinander aufweisen. Diese graphischen Objekte stellen also semantische Einheiten dar, die über Verknüpfungseinheiten verbunden sind. Wenn die zuvor erläuterten Vorgehensweisen angewendet werden, können zum Beispiel Formgebungen und/oder Farben der graphischen Objekte abhängig von einer jeweils vorliegenden Situation verändert werden. Dabei ist es von Vorteil, Vektorgraphik zu verwenden.

Dieses Verfahren kann in einer Anwendung auch dazu verwendet werden, um spezielle semantische Einheiten, sogenannte View-Einheiten, zu erzeugen, zu verändern und/oder zu löschen, die dazu dienen, das vorliegende semantische Netz, im folgenden Modell genannt, einem oder mehreren Benutzern graphisch oder textuell darzustellen.

Der innere Zustand der Janus-Einheit, die diese View-Einheiten erzeugt, kann sowohl vordefiniert sein als auch vom Benutzer/von den Benutzern verändert werden. Eine semantische Modell-Einheit, die diese Janus-Einheit besitzt, sei hier als "zentrales Objekt" bezeichnet. So kann zum Beispiel der Benutzer spezifizieren, daß ausschließlich für diejenigen semantische Modell-Einheiten View-Einheiten zu erzeugen sind, die sich in einer gegebenen Nachbarschaft des "zentralen Objekts" befinden und die über gegebene Verknüpfungstypen erreichbar sind. Der Benutzer kann eine Auswahl und Veränderung auch interaktiv, während das Programm läuft, durchführen.

Auf diese Weise kann sich ein Benutzer auf die ihn interessierenden Fragestellungen konzentrieren bzw. fokussieren.

Weitere mögliche Anwendungsgebiete der vorliegenden Erfindung sind zum Beispiel das Management von Versorgungs- oder Entsorgungsnetzen, robotervernetzte oder agentenvernetzte Systeme, eine Automatisierung im Bereich der Mensch-Maschine-Kommunikation, Mustererkennung, Simulation, Management der Online-Hilfe bei Computerprogrammen, Einsatz im Multimediaberereich oder der Filmindustrie, Steuern einer Hardwarevernetzung innerhalb eines Computers oder der Vernetzung von Computern, Entscheidungsfindung und Mustererkennung in der Börse, im Markt, oder in der Politik, automatisches Steuern von Fahrzeugen, von Produktionsnetzen innerhalb einer Firma, zum Beispiel mittels Simulation, Anwendungen im medizinischen Bereich, wie zum Beispiel Management von Vernetzungssystemen von Kliniken oder Ärzten, Management der Kommunikation zwischen Arzt und Patient (zum Beispiel hat der Patient zu Hause medizinische Beobachtungsgeräte, welche über einen Computer mit dem Computer eines entsprechenden Arzts vernetzt sind), Einsatz bei der Online-Überwachung von Patienten in der Intensivstation oder im Operationssaal, Anwendung im Facility-Management oder Risiko-Management oder Organisation des Lernens im Netz.

## Patentansprüche

1. Semantisches Netz, das aus einer Vielzahl von Einheiten besteht, wobei das semantische Netz sowohl semantische Einheiten (6), die Beziehungsinhalte besitzen, als auch Verknüpfungseinheiten (1a bis 4c) enthält, die einen Beziehungsinhalt beschreiben, der jeweils zwei semantische Einheiten (6) derart verknüpft, daß die gegenseitige Beziehung der beiden verknüpften semantischen Einheiten (6) durch den Beziehungsinhalt bestimmt wird, wobei:
mindestens einige der semantischen Einheiten (6) spezielle semantische Janus-Einheiten (5) sind, die ebenfalls mit anderen semantischen Einheiten (6) über Verknüpfungseinheiten (1 bis 4c) verknüpft sind;
diese semantischen Janus-Einheiten (5) Operationen ausführen können an sich selbst, an den semantischen Einheiten (6), mit denen diese verknüpft sind und/oder an denen, mit denen wiederum diese direkt oder indirekt verknüpft sind und/oder an den Verknüpfungseinheiten (1 bis 4c) dieser genannten semantischen Einheiten (6) und diese semantischen Janus-Einheiten (5) zeitlich veränderliche Zustände besitzen,
***dadurch gekennzeichnet, daß**:*
die zeitlich veränderlichen Zustände bestimmen, an welchen semantischen Einheiten (6) und/oder Verknüpfungseinheiten (1a bis 4c) welche Operationen auszuführen sind, und
aufgrund der Operationen der semantischen Janus-Einheiten (5) veränderte Werte von Informationsinhalten der semantischen Einheiten (6) und/oder Verknüpfungseinheiten (1 bis 4c) eingestellt, neue semantische Einheiten (6) und/oder Verknüpfungseinheiten (1a bis 4c) und/oder Teilnetze eingeführt und/oder semantische Einheiten (6) und/oder Verknüpfungseinheiten (1a bis 4c) und/oder Teilnetze innerhalb des semantischen Netzes verändert oder gelöscht werden.

2. Semantisches Netz nach Anspruch 1, ***dadurch gekennzeichnet, daß*** die zeitlich veränderlichen Zustände der semantischen Janus-Einheiten (5) eine jeweilige im semantischen Netz vorhandene Situation ausdrücken, in deren Abhängigkeit ein Operieren innerhalb des semantischen Netzes ausgeführt wird, bei welchem ein Fokussieren auf ausgewählte Teile des semantischen Netzes stattfindet.

3. Semantisches Netz nach Anspruch 1, ***dadurch gekennzeichnet, daß*** die semantischen Janus-Einheiten (5) sowohl eine zu beobachtende Nachbarschaft, die von den semantischen Janus-Einheiten (5) beobachtet wird, als auch eine zu gestaltende Nachbarschaft besitzen, an der die semantischen Janus-Einheiten (5) Operationen ausführen, und ein jeweils neuer zeitlich veränderlicher Zustand der semantischen Janus-Einheiten (5) aus dem vorliegenden zeitlich veränderlichen Zustand der semantischen Janus-Einheiten (5) und/oder aus einer Analyse einer gegebenenfalls veränderlichen zu beobachtenden Nachbarschaft ermittelt wird.

4. Semantisches Netz nach Anspruch 3, ***dadurch gekennzeichnet, daß*** die zu beobachtende Nachbarschaft und/oder die zu gestaltende Nachbarschaft aus einer Untermenge einer Nachbarschaft von semantischen Einheiten (6), mit denen eine jeweilige semantische Janus-Einheit (5) verknüpft ist, und/oder aus einer Untermenge einer Nachbarschaft der jeweiligen semantischen Janus-Einheit (5) selbst gebildet werden.

5. Semantisches Netz nach einem der Ansprüche 1 bis 4, ***dadurch gekennzeichnet, daß*** sich die semantischen Janus-Einheiten (5) abhängig vom vorliegenden zeitlich veränderlichen Zustand nur auf Oberobjekte, die sich auf einer höheren Skala befinden, Unterobjekte, die sich auf einer niedrigeren Skala befinden und/oder Nachbarobjekte, die sich auf einer gleichen Skala befinden, der semantischen Einheiten (6), mit denen sie verknüpft sind, und/oder der semantischen Janus-Einheiten (5) selbst, konzentrieren.

6. Semantisches Netz nach Anspruch 5, ***dadurch gekennzeichnet, daß*** ebenso die Verknüpfungseinheiten (1a bis 4c) zu den Oberobjekten, Unterobjekten und/oder Nachbarobjekten mit einbezogen werden.

7. Semantisches Netz nach einem der Ansprüche 1 bis 6, ***dadurch gekennzeichnet, daß*** die semantischen Janus-Einheiten (5) ferner Beurteilungskriterien besitzen, die angeben, welche Informationsinhalte von semantischen Einheiten (6), welche semantischen Einheiten (6) oder welche Teilnetze als nächstes zu behandeln sind; welche Prioritäten in einer semantischen Einheit (6), einem Teilnetz oder dem gesamten semantischen Netz gesetzt werden; wie aus den Zuständen von semantischen Einheiten (6), von Teilnetzen des semantischen Netzes oder von dem gesamten semantischen Netz zeitlich veränderliche Zustände von semantischen Janus-Einheiten (5) abzuleiten sind; wie schnell sich zeitlich veränderliche Zustände von semantischen Janus-Einheiten (5) ändern; und/oder wie semantische Einheiten (6) und/oder Verknüpfungseinheiten (1a bis 4c) behandelt werden.

8. Semantisches Netz nach Anspruch 7, ***dadurch gekennzeichnet, daß*** die Beurteilungskriterien zeitlichen Veränderungen unterliegen, die sich bezüglich den zeitlich veränderlichen Zuständen der semantischen Janus-Einheiten (5) nur geringfügig ändern.

9. Semantisches Netz nach einem der Ansprüche 1 bis 8, ***dadurch gekennzeichnet, daß*** die semantischen Einheiten (6) ebenso ihre eigenen Informationsinhalte oder Verknüpfungseinheiten (1a bis 4c) ändern oder löschen und/oder neue Informationsinhalte und/oder Verknüpfungseinheiten (1a bis 4c) erzeugen oder sich selbst löschen können.

10. Semantisches Netz nach einem der Ansprüche 1 bis 9, ***dadurch gekennzeichnet, daß*** die semantischen Janus-Einheiten (5) ebenso über Verknüpfungseinheiten (1a bis 4c) mit anderen semantischen Janus-Einheiten (5) und/oder Verknüpfungseinheiten (1a bis 4c) verknüpft sein können und an diesen Operationen durchführen können.

11. Semantisches Netz nach einem der Ansprüche 1 bis 10, ***dadurch* gekennzeichnet, *daß*** der zeitlich veränderliche Zustand von semantischen Janus-Einheiten (5) anhand von in einem zweidimensionalen Koordinatensystem aufgetragenen Punkten definiert wird.

12. Semantisches Netz nach Anspruch 11, ***dadurch gekennzeichnet, daß*** der zeitlich veränderliche Zustand anhand eines Regelsatzes oder von Bewegungsgleichungen eines Modells verschoben wird und somit ein neuer zeitlich veränderlicher Zustand definiert wird.

13. Semantisches Netz nach einem der Ansprüche 1 bis 12, ***dadurch gekennzeichnet, daß*** mindestens Teile der semantischen Einheiten (6) graphische Objekte sind, die untereinander mit Verknüpfungseinheiten (1a bis 4c) verknüpft sind.

14. Semantisches Netz nach Anspruch 13, ***dadurch gekennzeichnet, daß*** abhängig von jeweils vorliegenden zeitlich veränderlichen Zuständen von semantischen Janus-Einheiten (5) Formgebungen und/oder Farben jeweiliger graphischer Objekte verändert werden.

15. Sematisches Netz nach Anspruch 13 oder 14, ***dadurch gekennzeichnet, daß*** Vektorgraphik verwendet wird.

16. Semantisches Netz nach einem der Ansprüche 13 bis 15, ***dadurch gekennzeichnet, daß*** semantische Janus-Einheiten (5) innerhalb eines virtuellen von ihnen wahrgenommenen semantischen Netzes semantische Einheiten (6) virtuell neu plazieren, neu kombinieren, neu erzeugen, verändern, löschen, ersetzen und damit Erwartungen ausrechnen, Vorhersagen machen und/oder eine neue Identität finden können.

17. Semantisches Netz nach Anspruch 16, ***dadurch gekennzeichnet, daß*** die semantischen Janus-Einheiten (5) Algorithmen und/oder Verfahren besitzen oder neu erzeugen können, diese weiter entwickeln können und mit ihnen in einer virtuellen Umgebung genauso wie in realen semantischen Netzen operieren können, wobei sich jede semantische Janus-Einheit (5) in sich je nach Bedarf ein Abbild eines Teilnetzes schaffen und an diesem arbeiten kann als ob das Abbild tatsächlich im semantischen Netz vorhanden wäre.

18. Semantisches Netz nach einem der Ansprüche 3 bis 17, ***dadurch gekennzeichnet, daß*** der zeitlich veränderliche Zustand einer semantischen Janus-Einheit (5) und/oder die Wahl der zu beobachtenden und/oder der zu gestaltenden Nachbarschaft interaktiv von einem Benutzer oder von Benutzern verändert werden kann.

19. Semantisches Netz nach Anspruch 18, ***dadurch gekennzeichnet, daß*** eine semantische Janus-Einheit (5) semantische View-Einheiten erzeugt, löscht und/oder verändert, die dem Benutzer oder den Benutzern semantische Modell-Einheiten der zu beobachtenden Nachbarschaft präsentieren.

## Claims

1. A semantic network comprised of a multiplicity of units, wherein said semantic network contains both semantic units (6) possessing relational contents and also linking units (1a to 4c) describing a relational content which links two respective semantic units (6) such that the mutual relation of the two linked semantic units (6) is determined by the relational content, wherein:
at least some of said semantic units (6) are specific semantic Janus units (5) which are also linked with other semantic units (6) through linking units (1 to 4c);
the said semantic Janus units (5) are capable of carrying out operations on themselves, on semantic units (6) to which they are linked and/or on those to which these are in turn directly or indirectly linked and/or on the linking units (1 to 4c) of the said mentioned semantic units (6), and the said semantic Janus units (5) possess time-variable states,
***characterized in that**:*
said time-variable states determine what operations are to be carried out on what semantic units (6) and/or linking units (1a to 4c), and
values of informational contents of said semantic units (6) and/or linking units (1 to 4c) changed as a result of the operations of said semantic Janus units (5) are set, new semantic units and/or linking units (1a to 4c) and/or partial networks are introduced and/or semantic units (6) and/or linking units (1a to 4c) and/or partial networks within said semantic network are changed or deleted.

2. A semantic network in accordance with claim 1, ***characterized in that*** the time-variable states of the semantic Janus units (5) express a respective situation existing in said semantic network, in dependence on which operating within said semantic network is carried out, wherein focusing on selected parts of said semantic network takes place.

3. A semantic network in accordance with claim 1, ***characterized in that*** said semantic Janus units (5) have both a vicinity to be monitored, which is monitored by said semantic Janus units (5), and a vicinity to be shaped on which said semantic Janus units (5) perform operations, and a respective new time-variable state of said semantic Janus units (5) is determined from the existing time-variable state of said semantic Janus units (5) and/or from an analysis of an optionally variable vicinity to be monitored.

4. A semantic network in accordance with claim 3, ***characterized in that*** said vicinity to be monitored and/or said vicinity to be shaped are formed of a subset of a vicinity of semantic units (6) to which a respective semantic Janus unit (5) is linked, and/or of a subset of a vicinity of the very respective semantic Janus unit (5).

5. A semantic network in accordance with any one of claims 1 through 4, ***characterized in that*** said semantic Janus units (5), dependently on the existing time-variable state, only concentrate on superobjects located on a higher scale, subobjects located on a lower scale, and/or adjacent objects located on a same scale of said semantic units (6) to which they are linked, and/or on said semantic Janus units (5) themselves.

6. A semantic network in accordance with claim 5, ***characterized in that*** said linking units (1a to 4c) are also incorporated with said superobjects, subobjects and/or adjacent objects.

7. A semantic network in accordance with any one of claims 1 through 6, ***characterized in that*** said semantic Janus units (5) furthermore possess evaluation criteria indicating what informational contents of semantic units (6), what semantic units (6), or what partial networks are to be treated next; what priorities are set in a semantic unit (6), in a partial network, or in said entire semantic network; in what manner time-variable states of semantic Janus units (5) are to be deducted from the states of semantic units (6), of partial networks of said semantic network, or of said entire semantic network; how rapidly time-variable states of semantic Janus units (5) change; and/or in what manner semantic units (6) and/or linking units (1a to 4c) are treated.

8. A semantic network in accordance with claim 7, ***characterized in that*** said evaluation criteria are subject to temporal changes which change only slightly with respect to the time-variable states of said semantic Janus units (5).

9. A semantic network in accordance with any one of claims 1 to 8, ***characterized in that*** said semantic units (6) are equally capable of changing or deleting their own informational contents or linking units (1a to 4c) and/or generating new informational contents and/or linking units (1a to 4c) or deleting themselves.

10. A semantic network in accordance with any one of claims 1 to 9, ***characterized in that*** said semantic Janus units (5) may also be linked with other semantic Janus units (5) and/or linking units (1a to 4c) through linking units (1a to 4c) and are capable of carrying out operations on these.

11. A semantic network in accordance with any one of claims 1 to 10, ***characterized in that*** said time-variable state of semantic Janus units (5) is defined with the aid of points plotted in a two-dimensional system of coordinates.

12. A semantic network in accordance with claim 11, ***characterized in that*** said time-variable state is shifted with the aid of a set of rules or of motion equations of a model, whereby a new time-variable state is thus defined.

13. A semantic network in accordance with any one of claims 1 to 12, ***characterized in that*** at least parts of said semantic units (6) are graphic objects linked among each other through linking units (1a to 4c).

14. A semantic network in accordance with claim 13, ***characterized in that*** shapes and/or colors of respective graphic objects are changed depending on respective existing, time-variable states of semantic Janus units (5).

15. A semantic network in accordance with claim 13 or 14, ***characterized in that*** vector graphics are used.

16. A semantic network in accordance with any one of claims 13 to 15, ***characterized in that*** semantic Janus units (5) may within a virtual semantic network perceived by them virtually reposition, recombine, newly generate, change, delete, replace semantic units (6) and thereby calculate expectations, make predictions and/or find a new identity.

17. A semantic network in accordance with claim 16, ***characterized in that*** said semantic Janus units (5) may possess or newly generate algorithms and/or methods, further develop them, and operate with them in a virtual environment just like in real semantic networks, each semantic Janus unit (5) being capable of creating in itself, according to need, an image of a partial network and operating on the latter just as if said image were indeed existing in said semantic network.

18. Semantic network in accordance with any one of claims 3 to 17, ***characterized in that*** the time-variable state of a semantic Janus unit (5) and/or the selection of the vicinity to be monitored and/or the vicinity to be shaped may interactively be changed by a user or by users.

19. A semantic network in accordance with claim 18, ***characterized in that*** a semantic Janus unit (5) generates, deletes and/or changes semantic view units that present semantic model units of the vicinity to be monitored to the user(s).

## Revendications

1. Réseau sémantique se composant d'une pluralité d'unités, le réseau sémantique contenant non seulement des unités sémantiques (6), qui possèdent des contenus de relation, mais également des unités de combinaison (1a à 4c), qui décrivent un contenu de relation, qui combine respectivement deux unités sémantiques (6) de telle sorte que la relation mutuelle des deux unités sémantiques combinées (6) est déterminée par le contenu de relation, dans lequel :
au moins certaines des unités sémantiques (6) sont des unités Janus sémantiques spéciales (5), qui sont combinées également à d'autres unités sémantiques (6) par les unités de combinaison (1a à 4c) ;
ces unités Janus sémantiques (5) peuvent effectuer en elles-mêmes des opérations sur les unités sémantiques (6) avec lesquelles celles-ci sont combinées et/ou sur celles avec lesquelles celles-ci sont directement ou indirectement combinées et/ou sur les unités de combinaison (1a à 4c) de ces unités sémantiques précitées (6) et ces unités Janus sémantiques (5) possèdent des états variables temporellement,
**caractérisé en ce que** :
les états variables temporellement déterminent sur quelles unités sémantiques (6) et/ou unités de combinaison (1a à 4c) quelles opérations sont à effectuer, et
en raison des opérations des unités Janus sémantiques (5) des valeurs modifiées de contenus d'informations des unités sémantiques (6) et/ou des unités de combinaison (1a à 4c) sont réglées, de nouvelles unités sémantiques (6) et/ou unités de combinaison (1a à 4c) et/ou des réseaux partiels sont introduits et/ou des unités sémantiques (6) et/ou des unités de combinaison (1a à 4c) et/ou des réseaux partiels à l'intérieur du réseau sémantique sont modifiés ou effacés.

2. Réseau sémantique selon la revendication 1, **caractérisé en ce que** les états variables temporellement des unités Janus sémantiques. (5) expriment une situation existante respective dans le réseau sémantique, en fonction de laquelle une opération à l'intérieur du réseau sémantique est effectuée, dans lequel une concentration sur des parties sélectionnées du réseau sémantique est effectuée.

3. Réseau sémantique selon la revendication 1, **caractérisé en ce que** les unités Janus sémantiques (5) possèdent non seulement un voisinage à observer, qui est observé par les unités Janus sémantiques (5), mais également possèdent un voisinage à réaliser, sur lequel les unités Janus sémantiques (5) effectuent les opérations, et un nouvel état variable temporellement respectif des unités Janus sémantique (5) est détecté à partir de l'état variable temporellement présent des unités Janus sémantiques (5) et/ou à partir d'une analyse d'un voisinage à observer éventuellement variable.

4. Réseau sémantique selon la revendication 3, **caractérisé en ce que** le voisinage à observer et/ou le voisinage à réaliser est lui-même formé à partir d'une quantité partielle d'un voisinage d'unités sémantiques (6), avec lesquelles une unité Janus sémantique respective (5) est combinée, et/ou à partir d'une quantité partielle d'un voisinage de l'unité Janus sémantique respective (5).

5. Réseau sémantique selon une des revendications 1 à 4, **caractérisé en ce que** les unités Janus (5) se concentrent en fonction de l'état variable temporellement présent uniquement sur des objets supérieurs, qui se trouvent sur une échelle plus élevée, des sous-objets, qui se trouvent sur une échelle inférieure et/ou des objets adjacents, qui se trouvent sur une même échelle des unités sémantiques (6) avec lesquelles ils sont combinés, et/ou des unités Janus sémantiques (5) elles-mêmes.

6. Réseau sémantique selon la revendication 5, **caractérisé en ce qu'**également les unités de combinaison (1a à 4c) sont comprises avec les objets supérieurs, les sous-objets et/ou les objets adjacents.

7. Réseau sémantique selon l'une des revendications 1 à 6, **caractérisé en ce que** les unités Janus sémantiques (5) possèdent en outre des critères d'appréciation qui indiquent quels contenus d'informations d'unités sémantiques (6), quelles unités sémantiques (6) ou quels réseaux partiels sont à traiter en priorité ; quelles priorités sont placées dans une unité sémantique (6), un réseau partiel ou le réseau sémantique complet ; comment à partir des états d'unités sémantiques (6), de réseau partiel du réseau sémantique ou du réseau sémantique complet quels états variables temporellement sont à dériver d'unités Janus sémantiques (5) ; à quelle vitesse les états variables temporellement d'unités Janus sémantiques (5) varient ; et/ou comment les unités sémantiques (6) et/ou les unités de combinaison (1a à 4c) sont traitées.

8. Réseau sémantique selon la revendication 7, **caractérisé en ce que** les critères d'appréciation subissent des variations temporelles qui ne s'écartent que faiblement vis-à-vis des états temporellement variables des unités Janus sémantiques (5).

9. Réseau sémantique selon l'une des revendications 1 à 8, **caractérisé en ce que** les unités sémantiques (6) modifient ou suppriment également leurs propres contenus d'informations ou unités de combinaison (1a à 4c) et/ou génèrent de nouveaux contenus d'informations et/ou unités de combinaison (1a à 4c) ou peuvent s'éteindre d'elles-mêmes.

10. Réseau sémantique selon l'une des revendications 1 à 9, **caractérisé en ce que** les unités Janus sémantiques (5) peuvent être également combinées par l'intermédiaire d'unités de combinaison (1a à 4c) avec d'autres unités Janus sémantiques (5) et/ou des unités de combinaison (1a à 4c) et peuvent effectuer des opérations sur celles-ci.

11. Réseau sémantique selon une des revendications 1 à 10, **caractérisé en ce que** l'état temporellement variable d'unités Janus sémantiques (5) est défini à l'aide de points portés dans un système de coordonnées bidimensionnel.

12. Réseau sémantique selon la revendication 11, **caractérisé en ce que** l'état temporellement variable est décalé à l'aide d'un groupe régulateur ou d'équations de mouvement d'un modèle et ainsi est défini un nouvel état temporellement variable.

13. Réseau sémantique selon l'une des revendications 1 à 12, **caractérisé en ce qu'**au moins des parties des unités sémantiques (6) sont des objets graphiques, qui sont combinés entre eux à des unités de combinaison (1a à 4c).

14. Réseau sémantique selon la revendication 13, **caractérisé en ce qu'**en fonction d'états temporellement variables présents respectifs d'unités Janus sémantiques (5) des formes et/ou des couleurs d'objets graphiques respectifs sont modifiées.

15. Réseau sémantique selon la revendication 13 ou 14, **caractérisé en ce qu'**un graphique vectoriel est utilisé.

16. Réseau sémantique selon une des revendications 13 à 15, **caractérisé en ce que** des unités Janus sémantiques (5) à l'intérieur d'un réseau sémantique virtuel perçu par celles-ci peuvent placer nouvellement, combiner nouvellement, générer nouvellement, modifier, effacer, remplacer et ainsi calculer des probabilités, faire des prévisions et/ou trouver une nouvelle identité.

17. Réseau sémantique selon la revendication 16, **caractérisé en ce que** les unités Janus sémantiques (5) possèdent des algorithmes et/ou des procédés ou peuvent en générer de nouveaux, ceux-ci peuvent en outre développer et peuvent opérer avec eux dans un environnement virtuel comme dans des réseaux sémantiques réels, chaque unité Janus sémantiques (5) pouvant créer selon les besoins une image d'un réseau partiel et travailler sur celui-ci comme si l'image existait réellement dans le réseau sémantique.

18. Réseau sémantique selon l'une des revendications 3 à 17, **caractérisé en ce que** l'état temporellement variable d'une unité Janus sémantique (5) et/ou le choix du voisinage à observer et/ou à former peut être modifié de façon interactive par un utilisateur ou des utilisateurs.

19. Réseau sémantique selon la revendication 18, **caractérisé en ce qu'**une unité Janus sémantique (5) crée, efface et/ou modifie des unités de visualisation sémantiques, qui présente à ou aux utilisateurs des unités de modèle sémantiques du voisinage à observer.
